# EUROPEAN PATENT SPECIFICATION

(11) **EP 1 342 346 B1**
(45) Date of publication and mention of the grant of the patent: **28.09.2005**
(21) Application number: 01270986.1
(22) Date of filing: 27.11.2001
(51) Int. Cl.: H04L 12/56

(54) **FLOW CONTROL IN A RADIO ACCESS NETWORK**
FLUSSSTEUERUNG IN EINEM FUNKZUGRIFFSNETZWERK
CONTROLE DE FLUX DANS UN RESEAU D'ACCES RADIO TERRESTRE

(30) Priority: 13.12.2000 GB 0030344
(43) Date of publication of application: 10.09.2003
(73) Proprietor: TELEFONAKTIEBOLAGET LM ERICSSON (publ), 164 83 Stockholm (SE)
(72) Inventor: WIGELL, Toomas, FIN-02360 Espoo (FI); TORSNER, Johan, FIN-02600 Esbo (FI); SÖDERSTRÖM, Raul, S-02400 Kyrkslätt (SE); PEISA, Janne, FIN-00180 Espoo (FI)
(74) Representative: Kühn, Friedrich Heinrich
(86) International application number: PCT/EP2001/014101
(87) International publication number: WO 2002/049292

(56) References cited:
- EP-A- 0 777 396
- EP-A- 1 056 258
- XU K H: "RELIABLE STREAM TRANSMISSION PROTOCOLS IN MOBILE COMPUTING ENVIRONMENTS" BELL LABS TECHNICAL JOURNAL,US,BELL LABORATORIES, vol. 2, no. 3, 21 June 1997 (1997-06-21), pages 152-163, XP000703746 ISSN: 1089-7089

## Description

### Field of the Invention

The present invention relates to controlling the flow of data in a radio access network of a mobile telecommunications network. More particularly, the invention is concerned with controlling the flow of data between a NodeB (or Base Stations) and a Radio Network Controller of such a radio access network.

### Background to the Invention

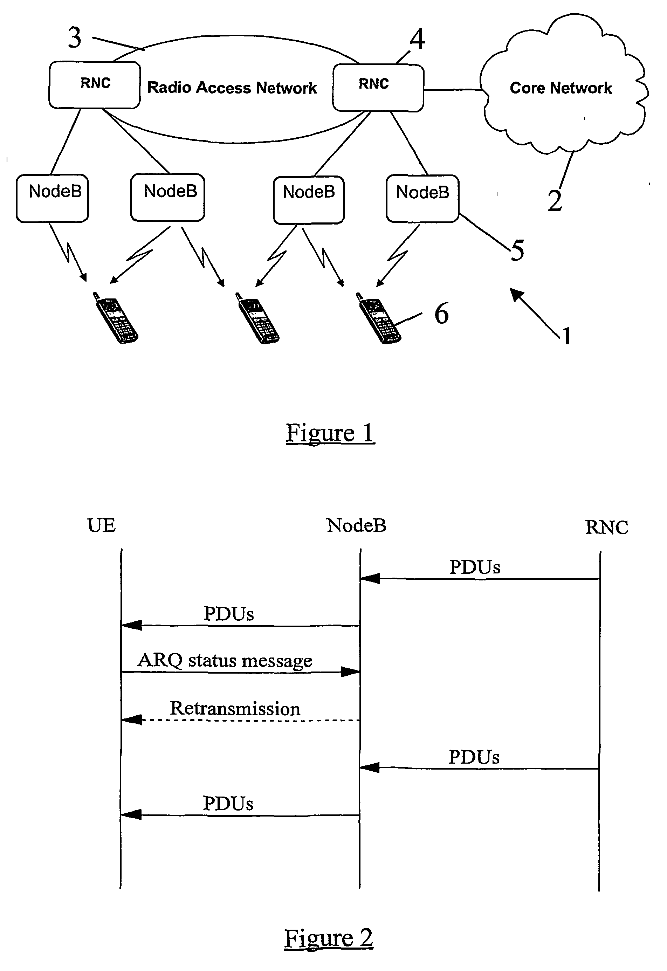

The European Telecommunications Standardisation Institute (ETSI) is currently in the process of standardising a new set of protocols for mobile telecommunications systems. The set of protocols is known collectively as the Universal Mobile Telecommunications System (UMTS). Figure 1 illustrates schematically a UMTS network 1 which comprises a core network 2 and a UMTS Terrestrial Radio Access Network (UTRAN) 3. The UTRAN 3 comprises a number of Radio Network Controllers (RNCs) 4, each of which is coupled to a set of neighbouring Base Stations (BSs) 5 - BSs are often referred to as NodeBs. Each BS 5 is responsible for communicating with mobile terminals (or User Equipment (UE) 6) within a given geographical cell, and the controlling RNC 4 is responsible for routing user and signalling data between a BS 5 and the core network 2. The interface between the RNCs is referred to as the Iur interface, whilst that between the BSs and the RNCs is referred to as the Iub interface. The air interface between the UE and the BSs is referred to as the Uu interface. A general outline of UTRAN is given in Technical Specification TS 25.401 V3.3.0 (1999-09) of the 3rd Generation Partnership Project, 3GPP.

Under the UTRAN proposals, certain transmission channels (e.g. channels using the RLC AM mode) make use of a mechanism known as Automatic-Repeat-Request (ARQ) to facilitate the retransmission of data packets which are either not received, or are received erroneously by a receiving entity, i.e. a UE or a RNC. An ARQ machine exists for each Radio Bearer (RB) - RBs being allocated to individual UEs. It will be appreciated that the retransmission path, involving as it does passage through a BS, can introduce a considerable delay into the retransmission time and can impact significantly on the performance of higher layer protocols (e.g. TCP).

In order to increase the available peak transmission rate, and to reduce transmission delays for packet data bearers in order to efficiently support high data rate, a new wideband CDMA (WCDMA) downlink shared channel is currently being standardised in 3GPP (papers R2-001120 and R2-001330). This channel is referred to as DSCH-E. One of the main features of the DSCH-E is the introduction of a retransmission entity in the NodeB (one retransmission entity exists for each terminal using the DSCH-E). The retransmission entity can work either in cooperation with the current ARQ mechanism in the RLC entity, or possibly as a standalone ARQ mechanism. In either case, buffering will be performed at the NodeB. This new mechanism is known as Hybrid ARQ (HARQ). Figure 2 illustrates the signalling involved in HARQ.

In a UMTS network, as in current digital networks, mobile terminals will be able to roam between NodeBs - this may or may not involve a change in the identity of the serving RNC. When a mobile terminal has to switch between a current and a new NodeB, the introduction of HARQ and the consequent buffering of data for that mobile terminal at the current NodeB requires that a copy of the buffered and unsent data be sent from the RNC to the new NodeB - the alternative is that all data buffered at the old NodeB is lost. In the former case it is important to minimise the buffer size at the NodeBs in order to minimise the duplication of data transmissions. In the latter case, minimising the buffer sizes at the NodeBs will be similarly advantageous as this will minimise the amount of data which is lost. On the other hand, minimising the buffer sizes at the NodeBs will reduce the effectiveness of the HARQ mechanism.

A similar problem has already been identified in the document from XU K H, "Reliable stream transmission protocols in mobile computing environments" published in Bell Labs Technical Journal, Vol. 2, No 3,21 June 1997, page 152-163.

### Statement of the Invention

It is an object of the present invention to overcome the disadvantages of the current 3GPP proposals. This and other objects are achieved by introducing a flow control mechanism between the RNC and the NodeB in order to limit the buffer size at the NodeB.

According to a first aspect of the present invention there is provided a method of controlling the flow of data, in respect of a given mobile terminal, between a Radio Network Controller (RNC) and a NodeB of a UMTS Terrestrial Radio Access Network (UTRAN) where an Automatic-Repeat-Request (ARQ) mechanism is implemented between the NodeB and said mobile terminal to provide for the retransmission of unsuccessfully transmitted data, the method comprising generating control messages at the NodeB, each control message identifies Protocol Data Units (PDUs) successfully transmitted over the air interface, and sending these control messages to the RNC, each control message enabling the RNC to identify which data should next be sent to the NodeB. The control messages enable the RNC to know which RLC PDUs have been successfully sent to a mobile terminal. The RNC can use this information to delete these sent PDUs from the RLC buffers.

Each control message may specify an amount of data which the RNC can send to the NodeB before a further control message is received. Thus, the NodeB can ensure that its buffers do not become too large. This in turn minimises the duplication of the sending of data, to an old and a new NodeB, in the event of a handover between NodeBs.

Alternatively, a sliding transmission window may be defined at the RNC, the window being advanced relative to the RLC buffers each time a control message is received. The window is advanced to encompass a sequence of RLC PDUs immediately ahead of the last PDU for which an acknowledgement has been received.

In a further alternative, each control message places a limit on the number of PDUs which may be sent from the RNC without corresponding acknowledgements having been received by the RNC. Following the receipt of acknowledgements, the RNC may send further PDUs until said limit is reached, or until a further control message is received defining a higher limit.

Preferably, successfully transmitted PDUs are identified in the control messages using sequence numbers associated with respective PDUs. Sequence number may be inserted into PDUs by a flow control protocol which is implemented at the RNC and the NodeB. Alternatively, the sequence numbers may be sequence numbers of another protocol implemented at the RNC, e.g. by the RLC entity.

According to a second aspect of the present invention there is provided UMTS Terrestrial Radio Access Network (UTRAN) comprising at least one Radio Network Controller (RNC) and a plurality of NodeBs, each NodeB being arranged to implement an Automatic-Repeat-Request (ARQ) mechanism between itself and communicating mobile terminals to provide for the retransmission of unsuccessfully transmitted data, each NodeB being further arranged to generate control messages identifying Protocol Data Units (PDUs) successfully transmitted over the air interface and to send these control messages to the RNC, each control message enabling the RNC to identify which data should next be sent to the NodeB.

### Brief Description of the Drawings

Figure 1 illustrates a conventional RAN architecture of a mobile telecommunications network;
Figure 2 illustrates control signalling associated with a HARQ mechanism in the network of Figure 1;
Figure 3 illustrates control signalling associated with a HARQ mechanism in the network of Figure 1 including flow control signalling between a RNC and a NodeB; and
Figure 4 is a flow diagram showing a method of flow control between a RNC and a NodeB of the network of Figure 1.

### Detailed Description of a Preferred Embodiment

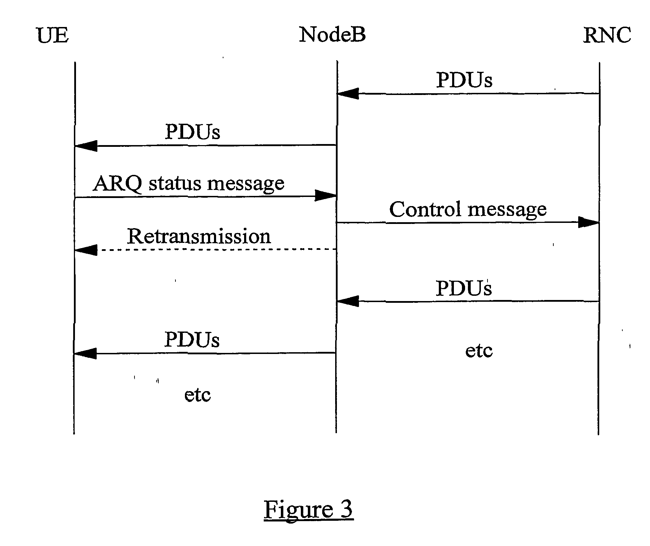

The Radio Access Network (RAN) of a UMTS mobile telecommunications network has been described above with reference to Figure 1. The HARQ mechanism for facilitating the retransmission of unsuccessfully sent data to a mobile terminal, and proposed for the new DSCH-E channel, has been described with reference to Figure 1. An embodiment of the present invention will now be described with reference to Figures 1 and 3.

In order to reduce the amount of data buffered at a NodeB for a given mobile terminal, it is necessary for the RNC serving the mobile terminal to know both how much data the NodeB is capable of handling at any given time and which data has already been successfully sent by the NodeB to the mobile terminal over the air interface. This is achieved by introducing a flow control mechanism between the NodeB and the RNC - specified using a new protocol identified here as Iub+frame handling protocol (Iub+FH). There remains a need for buffering "above" the NodeB, and this will typically be provided at the RLC entity of the RNC. However, buffering may alternatively be done at the Packet Data Convergence Protocol (PDCP) entity. The invention may be employed where RLC SDUs are segmented into RLC PDUs of fixed size, or where the RLC operates in a transparent mode such that RLC SDUs correspond exactly to RLC SDUs. However, the former is assumed to be the case in the following discussion.

The purpose of the Iub+FH protocol is threefold:
1. It enables the RNC to be notified of how much data the NodeB will allow it to send to that NodeB at any given time for the mobile terminal (or rather RB) in question;
2. It enables the RNC to be notified of RLC PDUs successfully transmitted over the air interface - this allows the RNC to empty the RLC buffers of corresponding RLC SDUs;
3. It allows the RNC (or PDCP) to transmit data already sent to a first NodeB, but which has not yet been successfully transmitted over the air interface, to a second NodeB in the case of a handover from the first to the second NodeB.

The protocol provides for the insertion of sequence numbers into RLC PDUs at the RNC (by the RLC entity). These sequence numbers are used by the NodeB and the RNC to identify RLC PDUs. When a NodeB receives an ARQ status message from a mobile terminal (containing one or a plurality of ACKs), the NodeB generates a control message at the flow control level containing the highest sequence number of the so far acknowledged packets. The control message also contains a credit c specifying the maximum number of RLC PDUs which can be outstanding at any given time, i.e. the number of PDUs which may have been sent from the RNC to the NodeB but for which confirmation of successful transmission has not yet been. Alternatively, the control message may specify rate at which the RNC can transmit data to the NodeB, i.e. the number of RLC PDUs per (predefined) transmission time interval.

Upon receipt of a control message from the NodeB, the RNC proceeds to erase from the RLC buffers the RLC SDUs for which PDUs have been successfully transmitted. In addition, the RNC deducts the number of currently outstanding RLC PDUs from the credit contained in the control messages, and that number of RLC PDUs from the RLC buffer: these are transmitted to the NodeB. Before sending further RLC PDUs, the RNC waits for a further control message.

In the event that a handover arises for a given mobile terminal - this decision being made by the Radio Resource Manager (RRM) of the RNC - the RLC buffers contain only unsent (or more exactly unacknowledged) RLC PDUs. The RNC will receive a control message from the new NodeB specifying a number of transmission credits c. The control message will not of course contain any sequence numbers identifying correctly transmitted PDUs. It is the responsibility of the RLC layer to transfer unsent PDUs to the new NodeB. During the handover process, the RRM of the RNC will signal to the old NodeB to empty the buffers at the NodeB corresponding to the traffic channel(s) associated with the mobile terminal and which are to be switched.

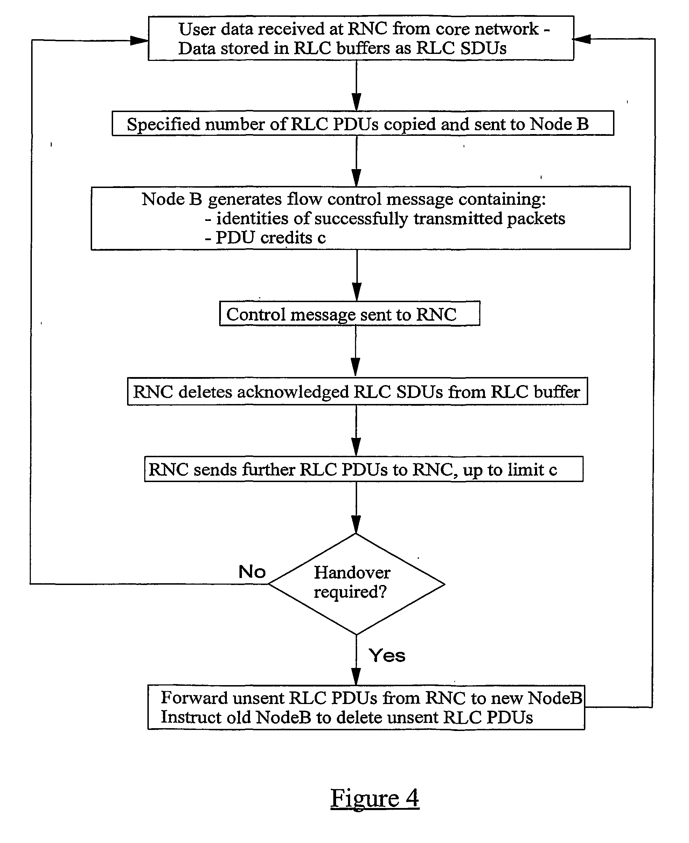

Figure 3 illustrates control signalling associated with a HARQ mechanism in the network of Figure 1 including flow control signalling between the RNC and the NodeB, whilst Figure 4 is a flow diagram showing a method of flow control between the RNC and the NodeB.

It will be appreciated by the person of skill in the art that various modifications may be made to the above described embodiments without departing from the scope of the present invention. For example, the flow of information from the RNC to the NodeB may be achieved using a "sliding window" at the RNC. The window size *W* is fixed in advance, and at the beginning of a transmission the RNC can transmit up to *W* PDUs. Upon receiving acknowledgements for correctly transmitted PDUs from the NodeB, the RLC will then transmit new PDUs so that the maximum number of outstanding (unacknowledged) PDUs is no more than *W*. Preferably the chosen window size should be large enough to allow NodeBs to completely utilise the maximum available transmission rate. Note that this solution does not require the use of an "Amount of data to be transmitted" field of the control messages sent from the NodeB to RNC.

## Claims

1. A method of controlling the flow of data, in respect of a given mobile terminal, between a Radio Network Controller further referred to as RNC and a NodeB of a UMTS Terrestrial Radio Access Network where an Automatic-Repeat-Request mechanism is implemented between the NodeB and said mobile terminal to provide for the retransmission of unsuccessfully transmitted data, the method comprising generating control messages at the NodeB, each control message identifying Protocol Data Units further referred to as PDUs successfully transmitted over the air interface, and sending these control messages to the RNC, each control message enabling the RNC to identify which data should next be sent to the NodeB.

2. A method according to claim 1, wherein the PDUs identified in the control messages are deleted by the RNC from the RLC buffers.

3. A method according to any one of the preceding claims, wherein each control message specifies an amount of data which the RNC can send to the NodeB before a further control message is received.

4. A method according to claim 1 or 2, wherein a sliding transmission window is defined at the RNC, the window being advanced relative to the RLC buffers each time a control message is received to encompass a sequence of RLC PDUs immediately ahead of the last PDU for which an acknowledgement has been received.

5. A method according to claim 1 or 2, wherein each control message places a limit on the number of PDUs which may be sent from the RNC without corresponding acknowledgements having been received by the RNC and, following the receipt of acknowledgements, the RNC sends further PDUs until said limit is reached, or until a further control message is received defining a higher limit.

6. A method according to any one of the preceding claims, wherein successfully transmitted PDUs are identified in the control messages using sequence numbers associated with respective PDUs.

7. A UMTS Terrestrial Radio Access Network comprising at least one Radio Network Controller and a plurality of NodeBs, each NodeB being arranged to implement an Automatic-Repeat-Request mechanism between itself and communicating mobile terminals to provide for the retransmission of unsuccessfully transmitted data, each NodeB being further arranged to generate control messages identifying Protocol Data Units successfully transmitted over the air interface and to send these control messages to the RNC, each control message enabling the RNC to identify which data should next be sent to the NodeB.

## Patentansprüche

1. Verfahren zum Steuern des Flusses von Daten, in Bezug auf ein gegebenes Mobilterminal, zwischen einem Radio Network Controller, nachstehend als RNC bezeichnet, und einem NodeB eines UMTS Terrestrial Radio Access Networks, bei dem ein Automatic-Repeat-Request Mechanismus zwischen dem NodeB und dem Mobilterminal implementiert ist, um eine Neuübertragung von nicht erfolgreich übertragenen Daten zu ermöglichen, wobei das Verfahren ein Erzeugen von Steuernachrichten an dem NodeB, wobei jede Steuernachricht Protocol Data Units, nachstehend als PDUs bezeichnet, identifiziert, die über die Luftschnittstelle erfolgreich übertragen werden, und ein Senden dieser Steuernachrichten an den RNC umfasst, wobei jede Steuernachricht den RNC befähigt zu identifizieren, welche Daten als nächstes an den NodeB gesendet werden sollen.

2. Verfahren nach Anspruch 1, wobei die PDUs, die in den Steuernachrichten identifiziert werden, durch den RNC von den RLC Puffern gelöscht werden.

3. Verfahren nach einem der vorangehenden Ansprüche, wobei jede Steuernachricht eine Menge von Daten spezifiziert, die der RNC an den NodeB senden kann, bevor eine weitere Steuernachricht empfangen wird.

4. Verfahren nach Anspruch 1 oder 2, wobei ein gleitendes Übertragungsfenster bei dem RNC definiert wird, wobei das Fenster relativ zu den RLC Puffern jedes Mal vorgerückt wird, wenn eine Steuernachricht empfangen wird, um eine Sequenz von RLC PDUs unmittelbar vor der letzten PDU, für die eine Bestätigung empfangen worden ist, zu umschließen.

5. Verfahren nach Anspruch 1 oder 2, wobei jede Steuernachricht eine Grenze auf die Anzahl von PDUs auferlegt, die von dem RNC gesendet werden können, ohne dass entsprechende Bestätigungen durch den RNC empfangen worden sind, und nach dem Empfang von Bestätigungen der RNC weitere PDUs sendet, bis die Grenze erreicht wird, oder bis eine weitere Steuernachricht empfangen wird, die eine höhere Grenze definiert.

6. Verfahren nach einem der voranstehenden Ansprüche, wobei erfolgreich übertragene PDUs in den Steuernachrichten unter Verwendung von Sequenznummern identifiziert werden, die zu jeweiligen PDUs gehören.

7. UMTS Terrestrial Radio Access Network, umfassend wenigstens einen Radio Network Controller und eine Vielzahl von NodeBs, wobei jeder NodeB angeordnet ist, um einen Automatic-Repeat-Request Mechanismus zwischen sich selbst und kommunizierenden Mobilterminals zu implementieren, um eine Neuübertragung von nicht erfolgreich übertragenen Daten zu ermöglichen, wobei jeder NodeB weiter angeordnet ist, um Steuernachrichten zu erzeugen, die Protocol Data Units identifizieren, die über die Luftschnittstelle erfolgreich übertragen werden, und um diese Steuernachrichten an den RNC zu senden, wobei jede Steuernachricht den RNC befähigt zu identifizieren, welche Daten als nächstes an den NodeB gesendet werden sollen.

## Revendications

1. Procédé de commande du flux de données, en relation avec un terminal mobile donné, entre un Contrôleur de Réseau Radio appelé par la suite RNC et un noeud B d'un Réseau d'Accès Radio Terrestre UMTS où un mécanisme de Requête de Répétition Automatique est mis en oeuvre entre le noeud B et ledit terminal mobile pour assurer la réémission de données émises sans succès, le procédé comprenant la génération de messages de commande au niveau du noeud B, chaque message de commande identifiant des Unités de Données de Protocole appelées par la suite PDU qui sont émises avec succès sur l'interface hertzienne et l'envoi de ces messages de commande au RNC, chaque message de commande permettant que le RNC identifie quelles données doivent ensuite être envoyées sur le noeud B.

2. Procédé selon la revendication 1, dans lequel les PDU qui sont identifiées dans les messages de commande sont supprimées par le RNC des tampons RLC.

3. Procédé selon l'une quelconque des revendications précédentes, dans lequel chaque message de commande spécifie une quantité de données que le RNC peut envoyer sur le noeud B avant qu'un message de commande supplémentaire ne soit reçu.

4. Procédé selon la revendication 1 ou 2, dans lequel une fenêtre d'émission glissante est définie au niveau du RNC, la fenêtre étant avancée par rapport aux tampons RLC chaque fois qu'un message de commande est reçu de manière à englober une séquence PDU de RLC immédiatement à l'avant de la dernière PDU pour laquelle un accusé de réception a été reçu.

5. Procédé selon la revendication 1 ou 2, dans lequel chaque message de commande place une limite sur le nombre de PDU qui peuvent être envoyées depuis le RNC sans que des accusés de réception correspondants n'aient été reçus par le RNC et, à la suite de la réception d'accusés de réception, le RNC envoie des PDU supplémentaires jusqu'à ce que ladite limite soit atteinte ou jusqu'à ce qu'un message de commande supplémentaire soit reçu, lequel définit une limite plus haute.

6. Procédé selon l'une quelconque des revendications précédentes, dans lequel des PDU émises avec succès sont identifiées dans les messages de commande en utilisant des numéros de séquence qui sont associés à des PDU respectives.

7. Réseau d'accès radio terrestre UMTS comprenant au moins un Contrôleur de Réseau Radio et une pluralité de noeuds B, chaque noeud B étant agencé de manière à mettre en oeuvre un mécanisme de Requête de Répétition Automatique entre lui-même et des terminaux mobiles de communication afin d'assurer la réémission de données émises sans succès, chaque noeud B étant en outre agencé pour générer des messages de commande qui identifient des Unités de Données de Protocole émises avec succès sur l'interface hertzienne et pour envoyer ces messages de commande sur le RNC, chaque message de commande permettant que le RNC identifie quelles données doivent être envoyées ensuite sur le noeud B.
